# EUROPÄISCHE PATENTSCHRIFT

(11) **EP 2 737 623 B1**
(45) Veröffentlichungstag und Bekanntmachung des Hinweises auf die Patenterteilung: **12.09.2018**
(21) Anmeldenummer: 12746018.6
(22) Anmeldetag: 19.07.2012
(51) Int. Cl.: H02P 23/14, H02P 29/02

(54) **ANTRIEBSSYSTEM UND VERFAHREN ZUM BETREIBEN EINES ANTRIEBSSYSTEMS**
DRIVE SYSTEM AND METHOD FOR OPERATING A DRIVE SYSTEM
SYSTÈME D'ENTRAÎNEMENT ET PROCÉDÉ PERMETTANT DE FAIRE FONCTIONNER UN SYSTÈME D'ENTRAÎNEMENT

(30) Priorität: 26.07.2011 DE 102011108417
(43) Veröffentlichungstag der Anmeldung: 04.06.2014
(73) Patentinhaber: Sew-Eurodrive GmbH & Co. KG, 76646 Bruchsal (DE)
(72) Erfinder: LERCH, Heiko, 76761 Rülzheim (DE); HERBOLD, Marcus, 76646 Bruchsal (DE)
(86) Internationale Anmeldenummer: PCT/EP2012/003039
(87) Internationale Veröffentlichungsnummer: WO 2013/013792

(56) Entgegenhaltungen:
- EP-A2- 2 309 641
- WO-A1-2004/042884
- WO-A1-2007/062612
- DE-A1-102008 026 759
- DE-B3-102006 042 038
- US-A1- 2005 050 965

## Beschreibung

Die Erfindung betrifft ein Antriebssystem.

Es ist bekannt, mittels eines Umrichters einem Elektromotor einen mehrphasigen Wechselstrom zuzuführen und den somit zugeführten Motorstrom zu erfassen.

Aus der DE 10 2006 042 038 B3 ist ein Verfahren zur sicheren Drehmomentbegrenzung bekannt.

Aus der WO 2004/042884 A1 ist ein Verfahren zum Ansteuern einer elektrischen Maschine bekannt.

Aus der US 2005 050965 A1 ist ein System zur Überwachung des Drehmoments bei einem elektrischen Motor bekannt.

Aus der WO 2007/062612 A1 ist eine Überwachungseinheit zur Lastüberwachung eines elektrischen Motors bekannt.

Aus der DE 10 2008 026 759 A1 ist ein Ölpumpensystem und ein Verfahren zum Verhindern einer Drehmomentüberlastung in Motoren von Ölpumpensystemen bekannt.

Aus der EP 2 309 641 A2 ist ein Verfahren zum fehlersicheren Überwachen eines elektromotorischen Antriebs bekannt.

Der Erfindung liegt die Aufgabe zugrunde, die Sicherheit eines Antriebssystems in einfacher Weise zu erhöhen.

Unter Elektromotor wird auch eine elektrische Maschine verstanden, also auch ein Generator.

Erfindungsgemäß wird die Aufgabe bei dem Antriebssystem nach den in Anspruch 1 angegebenen Merkmalen gelöst.

Von Vorteil ist dabei, dass ein Sicherheitswächter, also eine vom Umrichter separate Komponente, aus den erfassten Strom messwerten Modellwerte bestimmt und somit das Antriebssystem überwachbar ist. Einerseits ist auf diese Weise eine Überwachung des Modellwertes ermöglicht und andererseits ist eine Überwachung der Stromsensoren ermöglicht.

Dabei werden die von den Stromsensoren erfassten Stromwerte auch einer Steuerelektronik des Umrichters zugeführt, die pulsweitenmodulierte Ansteuersignale für die Leistungshalbleiter erzeugt, insbesondere abhängig von den erfassten Stromwerten. Von Vorteil ist dabei, dass der Umrichter in bekannter Weise aufbaubar ist. Zusätzlich ist nur ein Abschalten der Leistungselektronik durch den Sicherheitswächter zu ermöglichen, beispielsweise also ein durch den Sicherheitswächter bewirkbares Unterbrechen der Stromversorgung der Treiber für die Ansteuersignale der Leistungshalbleiter.

Erfindungsgemäß ist der Sicherheitswächter nur mit einem der dritten Phase zugeordneten Stromsensor verbunden, und/oder die in der dritten Phase erfassten Stromwerte werden nur dem Sicherheitswächter zugeführt. Von Vorteil ist dabei, dass die Stromerfassung für den Sicherheitswächter vollständig unabhängig ausgeführt ist von der Stromerfassung für die Steuerelektronik. Somit ist also auch die Berechnung des Modellwertes für Drehmoment vollständig unabhängig ausführbar und dadurch die Sicherheit der Überwachung erhöhbar.

Bei einer vorteilhaften Ausgestaltung sind die Leistungshalbleiter in Halbbrücken angeordnet, insbesondere wobei jede Halbbrücke eine jeweilige Phase des dem Motor zugeführten Wechselstroms speist. Von Vorteil ist dabei, dass durch Abschalten der Leistungshalbleiter auch ein Abschalten des Motors bewirkbar ist.

Dabei ist die physikalische Größe ein Drehmoment, nämlich das vom Motor erzeugte Drehmoment. Von Vorteil ist dabei, dass ein Modellwert für eine fundamentale Größe des Antriebssystems bestimmt wird. Somit ist auch ein belastungsabhängiger Drehmomentverlauf herausgebbar und dadurch eine Diagnose der den Antrieb umfassenden Anlage durchführbar.

Dabei ist der mehrphasige Strom ein Drehstrom, insbesondere wobei der Elektromotor ein Drehstrommotor ist. Von Vorteil ist dabei, dass Strommesswerte in drei Phasen bestimmbar sind und somit das Drehmoment aus verschiedenen Messwertpaaren bestimmbar ist und diese bestimmten Werte miteinander vergleichbar sind. Außerdem ist in der Steuerelektronik ein Wert für Drehmoment im Maschinenmodell bestimmbar. Diese Bestimmung ist in jedem Fall dann notwendig, wenn eine Drehmomentsollwertvorgabe an die Steuerelektronik des Umrichters erfolgen soll. Bei einer vorteilhaften Ausgestaltung umfasst der Sicherheitswächter einen Speicher zur Abspeicherung eines Wertes für ein kritisches Drehmoment,
wobei der Sicherheitswächter ein Vergleichsmittel aufweist, das einen Vergleich des aus den erfassten Stromwerten bestimmten Modellwertes und/oder des von der Steuerelektronik übermittelten ersten Modellwertes mit dem abgespeicherten Wert für ein kritisches Drehmoment ausführbar macht, und mittels des Vergleichsmittels abhängig vom Ergebnis des Vergleichs ein Abschalten der Leistungselektronik des Umrichters bewirkbar ist. Von Vorteil ist dabei, dass somit eine Drehmomentbegrenzung ausführbar ist. Denn, wenn ein unzulässig hoher Wert an Drehmoment erreicht wird, wird eine Abschaltung des Antriebssystems ausgeführt. Genauso ist der von der Steuerelektronik bestimmte und übermittelte Modellwert für Drehmoment vergleichbar mit dem abgespeicherten Wert für kritisches Drehmoment. Auf diese Weise ist die Sicherheit weiter erhöhbar. Es weist der Sicherheitswächter einen redundanten und/oder zweikanaligen Aufbau auf, nämlich zwei separate elektronische Schaltungen, auf, wobei die erfassten Stromwerte beiden Schaltungen zugeführt werden und der jeweils von einer Schaltung bestimmte Modellwert der jeweils anderen zugeführt wird, wobei mittels jeder der Schaltungen ein Abschalten der Leistungselektronik des Umrichters bewirkbar ist. Von Vorteil ist dabei, dass die Sicherheit mittels Redundanz erhöht ist. Insbesondere sind die Schaltungen diversitär ausführbar und somit die Sicherheit weiter erhöhbar.

Dabei sind die separaten Schaltungen auf einer einzigen Leiterplatte angeordnet, insbesondere galvanisch getrennt angeordnet und mittels Optokopplern signalverbunden. Von Vorteil ist dabei, dass eine kostengünstige Herstellung ausführbar ist und zusätzlich die Signalverbindung zwischen den Schaltungen besonders sicher mittels entsprechender galvanischer Trennmittel, wie Optokoppler und/oder Transformatoren, ausführbar ist. Die Gefahr von Spannungsüberschlägen zwischen den Schaltungen ist somit verhinderbar oder zumindest reduzierbar. Außerdem ist die Wahrscheinlichkeit einer Signalunterbrechung reduzierbar, die beispielsweise bei einer sich lösenden Steckverbindung eintreten könnte.

Erfindungsgemäss wird statt der elektrischen Leitungen zwischen Steuerelektronik und Sicherheitswächter der von der Steuerelektronik bestimmte Modellwert berührungslos übertragen, nämlich mittels Funkverbindung. Von Vorteil ist dabei, dass elektrische Leitungen einsparbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

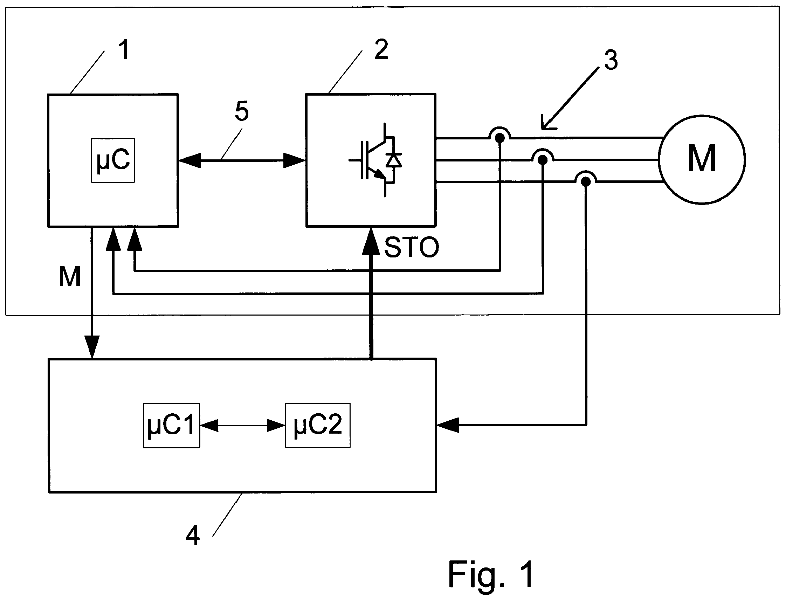

In der Figur 1 ist das Prinzip der Erfindung schematisch skizziert.

Die Steuerelektronik 1 erzeugt pulsweitenmodulierte Ansteuersignale 5 für die Leistungshalbleiterschalter der Leistungselektronik 2, insbesondere Endstufe, eines Umrichters, welcher zur Speisung eines Elektromotors M vorgesehen ist. Dabei ist die Leistungselektronik 2 vorzugsweise aus drei Halbbrücken zusammengesetzt, welche aus einer unipolaren Spannung, insbesondere Gleichspannung, versorgt werden. Diese unipolare Spannung wird von einem Netz-gespeisten Gleichrichter erzeugt oder aus einer Gleichspannungsquelle bereit gestellt.

Jede Halbbrücke besteht aus zumindest zwei in Reihe geschalteten ansteuerbaren Leistungshalbleiterschaltern, wie beispielsweise IGBT oder MOSFET-Transistoren.

Jede Halbbrücke speist eine der drei Motorphasen (U, V, W) des Elektromotors M. Die jeweiligen zu den Motorphasen zugehörigen Ströme werden mittels der Stromerfassung 3 erfasst, wobei entsprechende Sensoren vorgesehen sind. Ein erster Stromsensor macht somit den Stromwert in der U-Phase, ein zweiter in der V-Phase und ein dritter in der W-Phase erfassbar.

Zumindest zwei der erfassten Stromwerte, beispielsweise U und V, werden einerseits der Steuerelektronik 1 zugeführt, so dass die pulsweitenmodulierten Ansteuersignale 5 als Stellgrößen unter Verwendung eines Maschinenmodells bestimmbar sind und hierbei die erfassten Stromwerte einer Reglerstruktur als Istwerte zuführbar sind. Gemäß dem Maschinenmodell wird hierbei ein Modellwert für Drehmoment, also für das vom Motor abgegebene Drehmoment, bestimmt. Insbesondere ist zur Bestimmung des Drehmoments die Bestimmung eines Modellwertes für den Statorfluss notwendig, also ist eine Integration im Modell vorgesehen.

Außerdem wird zumindest einer der erfassten Stromwerte - im Beispiel also W - einem Sicherheitswächter 4 zugeführt, der als elektronische Schaltung ausgeführt ist. Dabei ist dieser zugeführte Stromwert vorzugsweise einer anderen Motorphase zugeordnet als diejenigen beiden Stromwerte, welche der Steuerelektronik 1 zugeführt werden.

Im Sicherheitswächter 4 wird der zugeführte Stromwert - im Beispiel also der der W-Phase zugeordnete erfasste Stromwert - verarbeitet. Insbesondere wird der zu einem Zeitintervall zugehörige Effektivwert und/oder der innerhalb eines Zeitintervalls auftretende Spitzenwert bestimmt. Vorzugsweise wird als Zeitintervall die halbe oder ganze Periodendauer des zugehörigen erfassten Stromwertesignals verwendet. Eine einfache Bestimmung der Periodendauer ist mittels der Bestimmung der Nulldurchgänge des Signals ausführbar.

Aus diesem verarbeiteten Wert wird auf den Motorstromraumzeiger geschlossen und daraus wiederum auf das vom Motor erzeugte Drehmoment.

Dabei wird vorausgesetzt, dass das Drehfeld eine zum Zeitintervall zugehörige Mindestdrehfrequenz aufweist. In diesem Fall ist der Wert des Drehmoments bestimmbar durch Multiplikation des Spitzenwertes beziehungsweise des Effektivwerts mit einem Motor-abhängigen Faktor.

Außerdem wird dem Sicherheitswächter 4 auch der von der Steuerelektronik 1 bestimmte Modellwert für das Drehmoment zugeführt zum Vergleich mit dem über den Faktor bestimmten Drehmomentwert.

Auf diese Weise ist bei Erreichen eines kritischen Zustandes vom Sicherheitswächter aus ein sicheres Abschalten der Endstufe bewirkbar. Beispielsweise ist dies erreichbar, indem die Versorgungsspannung der Treiber für die Leistungshalbleiter der Leistungselektronik abgeschaltet wird.

Somit ist beispielsweise ein vollständiges Einklemmen einer Person zwischen einem beweglichen Teil einer Maschine und einer Wand verhinderbar. Denn sobald sich die Person das bewegliche Teil berührt, erhöht sich das Drehmoment. Bei Überschreiten eines vorgegebenen kritischen Drehmomentwertes ist ein Abschalten oder sogar Zurückfahren ausführbar. Alternativ ist auch die zeitliche Ableitung des Drehmoments überwachbar auf Überschreiten eines zulässigen Grenzwertes, wobei wiederum nach Überschreiten abgeschaltet oder zurückgefahren wird.

Der Sicherheitswächter ist ein zweikanalig aufgebautes sicherheitsgerichtetes System. Die erfassten Stromwerte in einer der Phasen werden im Sicherheitswächter verwendet, um auf mindestens eine von der in der Steuerelektronik des Umrichters verwendete Maschinenmodellwertbestimmung unterschiedliche Weise einen Wert für Drehmoment zu bestimmen. Sobald dieser Wert von dem an den Sicherheitswächter übermittelten Wert voneinander abweicht um mehr als einen kritischen Wert, wird eine Abschaltung der Leistungselektronik veranlasst.

Hierbei wird im Sicherheitswächter 4 von einem ersten Mikrocontroller ein erster Drehmomentwert bestimmt unter Verwendung des Stromwertes, welcher der W-Phase zugeordnet ist, und indem der Spitzenwert im Zeitintervall bestimmt wird. Unabhängig davon wird im Sicherheitswächter 4 von einem zweiten Mikrocontroller ein zweiter Drehmomentwert bestimmt unter Verwendung des Stromwertes, welcher der W-Phase zugeordnet ist, und indem der Effektivwert im Zeitintervall bestimmt wird.

Beide Werte werden jeweils mit einem jeweiligen Faktor multipliziert, um jeweils einen Modellwert für Drehmoment zu erhalten.

Somit sind paarweise die drei unterschiedlich bestimmten Drehmomentwerte vergleichbar und auf das Überschreiten einer unzulässig großen Abweichung überwachbar.

Auf diese Weise ist also die Sicherheit erhöhbar. Denn bei einem fehlerhaften Bauteil, wie Stromsensor, ist eine Abschaltung ermöglicht.

Außerdem ist dem Sicherheitswächter ein Wert für ein kritisches Drehmoment zuführbar. Beispielsweise ist dieser Wert als Parameter mit Eingabemitteln, welche mit dem Sicherheitswächter elektrisch verbunden sind, oder über Feldbus dem Sicherheitswächter zuführbar, insbesondere bei der Inbetriebnahme der Anlage. Somit ist ein Vergleich des Drehmomentwertes, welcher von dem Sicherheitswächter bestimmt wird, mit dem Wert für ein kritisches Drehmoment ausführbar. Auf diese Weise ist eine Drehmomentbegrenzung realisierbar, da bei Überschreiten des Wertes für ein kritisches Drehmoment die Abschaltung der Leistungsstufe ausgeführt wird. Alternativ oder zusätzlich ist auch ein Vergleich des Modellwertes für Drehmoment mit dem kritischen Drehmoment ausführbar.

In einem weiteren erfindungsgemäßen Ausführungsbeispiels werden die verschiedenen Berechnungen des Drehmoments im Sicherheitswächter von zwei separaten elektronischen Schaltungen ausgeführt oder beide Berechnungen von beiden separaten Schaltungen.

Auf diese Weise ist somit die Sicherheit weiter erhöhbar. Das jeweilige von einer Schaltung bestimmte Ergebnis wird an die jeweils andere Schaltung übermittelt und von dieser mit dem eigen bestimmten, entsprechenden Ergebnis verglichen. Somit überwachen sich die beiden Schaltungen gegenseitig und können bei Abweichungen, die ein zulässiges Maß überschreiten, eine Abschaltung der Leistungselektronik bewirken, wobei die Abschaltung dann bewirkt wird, wenn eine der Schaltungen kein Freigabesignal erzeugt.

Bei weiteren erfindungsgemäßen Ausführungsbeispielen sind die beiden Schaltungen auf einer einzigen Leiterplatte angeordnet, tauschen Daten aus und/oder führen die Funktionalität des Überwachens des Drehmoments und des sicheren Abschaltens jeweils eigenständig aus.

Bei weiteren erfindungsgemäßen Ausführungsbeispielen sind die beiden Schaltungen diversitär ausgeführt.

Bei weiteren erfindungsgemäßen Ausführungsbeispielen veranlasst der Sicherheitswächter abhängig vom Ergebnis des Vergleichs als Aktion, dass
- eine Warnanzeige aktiviert wird,
- der Umrichter deaktiviert oder abgeschaltet wird und/oder
- die Leistungselektronik des Umrichters abgeschaltet wird.

### Bezugszeichenliste

1 Steuerelektronik
2 Leistungselektronik, insbesondere Endstufe
3 Stromerfassung
4 Sicherheitswächter
5 pulsweitenmodulierte Ansteuersignale
M Elektromotor
STO sichere Abschaltung der Leistungselektronik 2, insbesondere Endstufe
µC1 erster Mikrocontroller
µC2 zweiter Mikrocontroller

## Patentansprüche

1. Antriebssystem, umfassend zumindest einen einen Elektromotor speisenden Umrichter und einen Sicherheitswächter,
wobei dem Elektromotor mittels steuerbarer Leistungshalbleiter der Leistungselektronik des Umrichters ein dreiphasiger Wechselstrom zuführbar ist,
wobei in den drei Phasen des Wechselstroms ein Stromsensor angeordnet ist,
wobei die von den Stromsensoren erfassten Stromwerte auch einer Steuerelektronik des Umrichters zugeführt werden, die gemäß einem Maschinenmodell Ansteuersignale, insbesondere pulsweitenmodulierte Ansteuersignale, für die Leistungshalbleiter erzeugt, insbesondere abhängig von den erfassten Stromwerten,
wobei in der Steuerelektronik Mittel zur Bestimmung eines ersten Modellwertes für eine physikalische Größe, nämlich Drehmoment, vorgesehen sind und die Steuerelektronik zum Datenaustausch, insbesondere mittels elektrischer Leitungen, mit einem Sicherheitswächter verbunden ist, so dass der ermittelte erste Modellwert dem Sicherheitswächter zuführbar ist,
wobei die physikalische Größe das vom Motor erzeugte Drehmoment ist,
wobei die in einer dritten Phase erfassten Stromwerte auch einem Sicherheitswächter zugeführt werden, der zumindest ein Mittel zur Bestimmung eines zweiten Modellwertes für die physikalische Größe aufweist,
wobei der Sicherheitswächter Vergleichsmittel umfasst, mit welchen der erste Modellwert mit dem zweiten Modellwert vergleichbar ist,
**dadurch gekennzeichnet, dass**
statt der elektrischen Leitungen zwischen Steuerelektronik und Sicherheitswächter der von der Steuerelektronik bestimmte Modellwert kontaktlos übertragen wird mittels Funkverbindung,
wobei der Sicherheitswächter zwei separate elektronische Schaltungen, die auf einer einzigen Leiterplatte angeordnet sind, aufweist, wobei die erfassten Stromwerte beiden Schaltungen zugeführt werden und der jeweils von einer Schaltung bestimmte Modellwert der jeweils anderen zugeführt wird,
wobei aus der dritten Phase der Stromwert bestimmt und daraus von jeder Schaltung ein Drehmomentmodellwert unabhängig bestimmt wird,
wobei mittels jeder der Schaltungen ein Abschalten der Leistungselektronik des Umrichters bewirkbar ist,
wobei der Sicherheitswächter mit dem der dritten Phase zugeordneten Stromsensor verbunden ist nicht aber mit einem der ersten Phase zugeordneten Stromsensor und auch nicht mit einem der zweiten Phase zugeordneten Stromsensor,
und wobei die in der dritten Phase erfassten Stromwerte dem Sicherheitswächter zugeführt werden nicht aber der Steuerelektronik.

2. Antriebssystem nach Anspruch 1,
**dadurch gekennzeichnet, dass**
die Leistungshalbleiter in Halbbrücken angeordnet sind, insbesondere wobei jede Halbbrücke eine jeweilige Phase des dem Motor zugeführten Wechselstroms speist.

3. Antriebssystem nach Anspruch 1 oder 2,
**dadurch gekennzeichnet, dass**
der Sicherheitswächter einen Speicher umfasst zur Abspeicherung eines Wertes für ein kritisches Drehmoment,
wobei der Sicherheitswächter ein Vergleichsmittel aufweist, das einen Vergleich des aus den erfassten Stromwerten bestimmten Modellwertes und/oder des von der Steuerelektronik übermittelten ersten Modellwertes mit dem abgespeicherten Wert für ein kritisches Drehmoment ausführbar macht, und mittels des Vergleichsmittels abhängig vom Ergebnis des Vergleichs ein Abschalten der Leistungselektronik des Umrichters bewirkbar ist.

## Claims

1. A drive system, comprising at least one converter which feeds an electric motor, and a safety monitor,
wherein a three-phase alternating current can be supplied to the electric motor by means of controllable power semiconductors of the power electronics of the converter,
wherein a current sensor is arranged in the three phases of the alternating current, wherein the current values detected by the current sensors are also supplied to control electronics of the converter which, in accordance with a machine model, generates control signals, in particular pulse-width modulated control signals, for the power semiconductors, in particular as a function of the detected current values,
wherein means for determining a first model value for a physical variable, namely torque, are provided in the control electronics and the control electronics are connected for data exchange purposes, in particular by means of electrical lines, to a safety monitor, so that the ascertained first model value can be supplied to the safety monitor,
wherein the physical variable is the torque generated by the motor,
wherein the current values detected in a third phase are also supplied to a safety monitor which has at least one means for determining a second model value for the physical variable,
wherein the safety monitor comprises comparison means with which the first model value can be compared with the second model value,
**characterised in that**
instead of the electric lines between the control electronics and safety monitor the model value determined by the control electronics is transmitted in contactless manner by means of a radio link,
the safety monitor having two separate electronic circuits which are arranged on a single printed circuit board, the detected current values being supplied to both circuits and the model value determined by one circuit in each case being supplied to the respective other one,
the current value being determined from the third phase and a torque model value being determined independently by each circuit therefrom,
it being possible to switch off the power electronics of the converter by means of each of the circuits,
the safety monitor being connected to the current sensor associated with the third phase but not to a current sensor associated with the first phase, and not to a current sensor associated with the second phase either,
and the current values detected in the third phase being supplied to the safety monitor but not to the control electronics.

2. A drive system according to Claim 1,
**characterised in that**
the power semiconductors are arranged in half-bridges, in particular with each half-bridge feeding a respective phase of the alternating current which is supplied to the motor.

3. A drive system according to Claim 1 or 2,
**characterised in that**
the safety monitor comprises a memory for storing a value for a critical torque,
the safety monitor having a comparison means which makes a comparison of the model value which is determined from the detected current values and/or of the first model value which is transmitted by the control electronics with the stored value for a critical torque able to be performed, and the power electronics of the converter being able to be switched off by means of the comparison means as a function of the result of the comparison.

## Revendications

1. Système d'entraînement comprenant au moins un onduleur alimentant un moteur électrique, et un moniteur de sécurité,
un courant alternatif triphasé pouvant être délivré audit moteur électrique au moyen de semi-conducteurs de puissance, pouvant être commandés, de l'électronique de puissance dudit onduleur,
un détecteur de courant étant intégré dans les trois phases dudit courant alternatif,
les valeurs de courant, saisies par les détecteurs de courant, étant également délivrées à une électronique de commande de l'onduleur qui engendre à l'adresse desdits semi-conducteurs de puissance, en conformité avec un modèle de machine et notamment en fonction desdites valeurs de courant saisies, des signaux de pilotage et notamment des signaux de pilotage à largeurs d'impulsions modulées,
des moyens étant prévus, dans l'électronique de commande, pour la détermination d'une première valeur de modèle allouée à une grandeur physique, plus précisément à un couple de rotation, et ladite électronique de commande étant raccordée à un moniteur de sécurité en vue de l'échange de données, notamment au moyen de conducteurs électriques, de façon telle que la première valeur de modèle spécifiée puisse être délivrée audit moniteur de sécurité,
ladite grandeur physique étant le couple de rotation développé par le moteur,
les valeurs de courant, saisies dans une troisième phase, étant également délivrées à un moniteur de sécurité doté d'au moins un moyen de détermination d'une seconde valeur de modèle allouée à la grandeur physique,
ledit moniteur de sécurité incluant des moyens comparateurs, par lesquels ladite première valeur de modèle peut être comparée à ladite seconde valeur de modèle,
**caractérisé par le fait que**
la valeur de modèle déterminée par l'électronique de commande est transmise, sans contact, au moyen d'une liaison radio se substituant aux conducteurs électriques entre ladite électronique de commande et le moniteur de sécurité,
lequel moniteur de sécurité comporte deux circuits électroniques distincts implantés sur une unique plaquette imprimée, les valeurs de courant saisies étant délivrées aux deux circuits et la valeur de modèle, respectivement déterminée par un circuit, étant délivrée à l'autre circuit considéré,
la valeur de courant étant déterminée à partir de la troisième phase, et une valeur de modèle du couple de rotation étant déterminée par chaque circuit, sur cette base, de manière indépendante,
une déconnexion de l'électronique de puissance de l'onduleur pouvant être provoquée au moyen de chacun desdits circuits,
ledit moniteur de sécurité étant raccordé au détecteur de courant associé à la troisième phase, mais toutefois pas à un détecteur de courant associé à la première phase, et également pas à un détecteur de courant associé à la deuxième phase,
et les valeurs de courant saisies dans ladite troisième phase étant délivrées au moniteur de sécurité, mais cependant pas à l'électronique de commande.

2. Système d'entraînement selon la revendication 1,
**caractérisé par le fait que**
les semi-conducteurs de puissance sont agencés en des demi-ponts, sachant notamment que chaque demi-pont alimente une phase respective du courant alternatif délivré au moteur.

3. Système d'entraînement selon la revendication 1 ou 2,
**caractérisé par le fait que**
le moniteur de sécurité inclut une mémoire conçue pour mémoriser une valeur affectée à un couple de rotation critique,
ledit moniteur de sécurité présentant un moyen comparateur autorisant l'exécution d'une comparaison, avec ladite valeur mémorisée affectée à un couple de rotation critique, de la valeur de modèle déterminée à partir des valeurs de courant saisies, et/ou de la première valeur de modèle spécifiée par l'électronique de commande, une déconnexion de l'électronique de puissance de l'onduleur pouvant être provoquée, à l'aide dudit moyen comparateur, en fonction du résultat de ladite comparaison.
